# EUROPEAN PATENT APPLICATION

(11) **EP 1 375 282 A1**
(43) Date of publication of application: **02.01.2004**
(21) Application number: 03076654.7
(22) Date of filing: 28.05.2003
(51) Int. Cl.: B60T 8/48, B60T 8/42, B60T 8/32, B60T 8/34, B60T 8/40, B60T 13/66, B60T 13/74

(54) **Brake system for a vehicle having an integral precharge pump**

(30) Priority: 19.06.2002 US 174601
(71) Applicant: Delphi Technologies, Inc., Troy, MI 48007 (US)
(72) Inventor: Reuter, David F., Beavercreek, OH 45434 (US); Lloyd, Earl W., Lebanon, OH 45036 (US)
(74) Representative: Denton, Michael John

(57) **Abstract**

A controlled brake apparatus (10) and method of operating a brake apparatus utilize a pre-charge circuit (88) connected directly between the fluid reservoir (16) of a master cylinder (12) of the apparatus (10) and the inlet (42) of a controlled braking pump (40), to thereby direct pre-charge flow and pressure to the controlled braking pump inlet (42) in a parallel circuit relationship to a primary hydraulic circuit (22), rather than in a series flow arrangement through the primary hydraulic circuit (22) as was the case in prior brake systems. By feeding the pre-charge pressure and flow to the inlet (42) of the controlled braking pump (40) in this parallel circuit manner, components of the pre-charge circuit (88), such as a prime valve (78) and its associated check valve (84) are not exposed to braking pressure and can be made significantly smaller, lighter and at lower cost. The brake apparatus may also include a pre-charge pump (58) driven by the same motor (54) used for driving the controlled braking pump (40).

## Description

### TECHNICAL FIELD

This invention relates to vehicle brakes, and more particularly to a vehicle with a brake apparatus including a pump providing brake fluid during controlled braking operation of the vehicle.

### BACKGROUND OF THE INVENTION

Since the mid 1930s, vehicles such as automobiles and light trucks have predominantly utilized hydraulic brake systems having a pedal operated master cylinder supplying pressurized hydraulic fluid to disk or drum braking devices at each wheel.

Early hydraulic brake systems utilized a single hydraulic fluid circuit supplying pressurized fluid from the master cylinder to all four corners of the vehicle. A break in the fluid circuit anywhere rendered the entire hydraulic brake system inoperative.

In order to prevent a total loss of hydraulic braking in the event of a failure of part of the system, failsafe hydraulic split brake systems were developed that provided two separate fluid circuits from the master cylinder, configured such that a failure of either of the two fluid circuits would still leave hydraulic brakes operative on at least two corners of the vehicle. In rear wheel drive automobiles and light trucks, one fluid circuit typically served the front wheels, and the other fluid circuit served the rear wheels, to provide a front/rear (F/R) failsafe hydraulic split system. Front wheel drive vehicles typically used a diagonal failsafe hydraulic split system, having one front corner and the diagonally opposite rear comer of the vehicle on one fluid circuit, and the other front comer and its diagonally opposite rear comer on the second fluid circuit. These failsafe provisions were incorporated into government regulations that required brake systems to be configured such that a single failure of the braking system would still leave the brakes on at least two comers of the vehicle operational.

In the years since hydraulic brake systems became the norm, many additional features have been added to further enhance safe operation and optimize vehicle perfonnance Modem brake systems often include a booster that amplifies force exerted on the brake pedal, to provide power brakes that allow a person operating the vehicle to control the brakes with significantly less force on the brake pedal than is required in a non-boosted brake system. Antilock brake systems (ABS) were developed in which valves controlling fluid flow to each corner of the vehicle were pulsed, in response to signals received from rotation sensors monitoring each wheel, to preclude locking the brakes on slippery road surfaces. Traction control systems (TCS) were added that controlled both the brakes and the engine throttle setting to improve traction and handling of the vehicle during maneuvers, such as acceleration or turning, when the brakes are not being applied by the operator. Vehicle dynamics control (VDC) further advanced the level of sophistication of brake systems to utilize a number of sensors throughout the vehicle, and a more advanced onboard computer with higher throughput, to monitor forces acting on the vehicle, together with inputs indicating operational commands from the operator applied to the steering, braking, and drive systems. VDC analyzes the data received from the sensors and coordinates operation of the various elements of the vehicle brake system, power-train, and suspension to provide enhanced vehicle safety or performance of the vehicle.

The addition of all of these enhancements has made hydraulic brake systems very complex. Numerous valves, sensors, and electronic control components are required. Brake systems offering one or more types of automated control operating modes, such as ABS, TCS and VDC, are known as "controlled braking systems."

Recent advances in technology have made it feasible to develop a controlled brake system that utilizes electrically actuated brakes, rather than hydraulic brakes, on at least the rear comers of a vehicle. Such brake systems are known as "Hybrid" brake systems. Commonly assigned United States Patent Application No. 10/121,454 filed April 12, 2002, titled Hybrid Brake System for a Vehicle, by Reuter, et al, describes such a system, and is incorporated herein by reference.

To provide a flow of pressurized brake fluid during controlled braking operation in modes such as TCS and VDC where there is no brake pressure being produced by the master cylinder because the brake pedal is not depressed, controlled braking systems typically include a controlled braking pump driven by an electric motor for providing braking pressure during one or more of the controlled braking operations. Such controlled braking pumps must be capable of starting and producing braking pressure in a fraction of a second when the braking system recognizes the need for and initiates a controlled braking operation. At low ambient operating temperatures, the brake fluid becomes more viscous and flows through the fluid passages in the brake circuit at a significantly slower rate, making it difficult to get the controlled braking pump primed quickly enough to provide braking pressure during a controlled braking event, such as VDC during a quick swerving maneuver, for example.

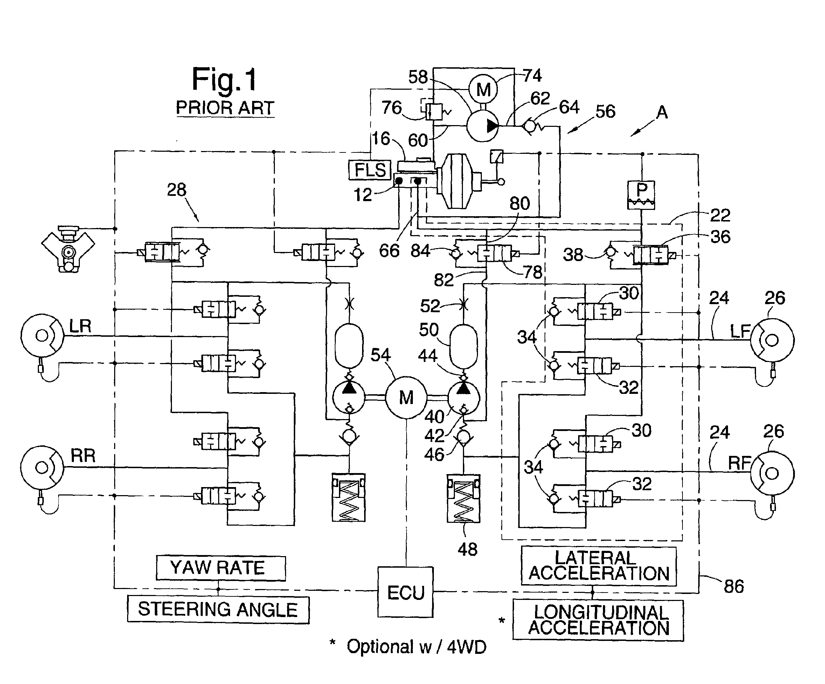

Prior controlled braking systems 'A', such as the one shown in FIG. 1, have incorporated a pre-charge circuit connected in parallel with the master cylinder, and in series with the hydraulic brake circuit to provide a pressurized flow of brake fluid through the hydraulic brake circuit lines to the inlet of the controlled braking pump under cold ambient operating conditions.

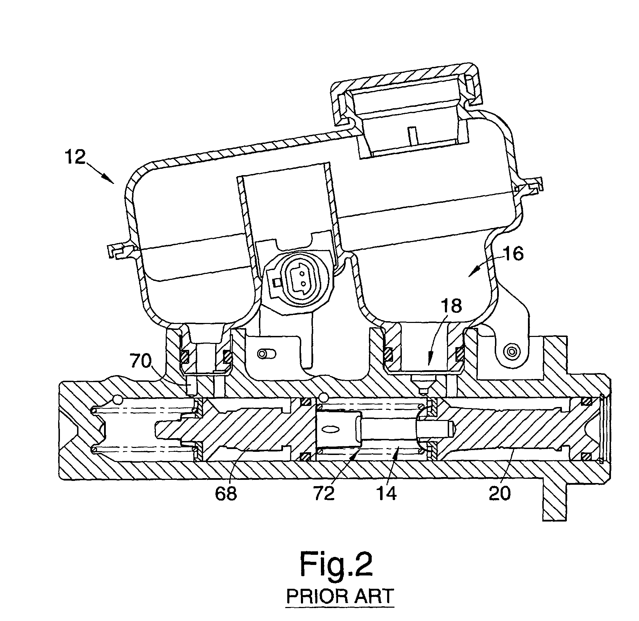

The prior controlled braking system A shown in FIG. 1 includes a master cylinder 12, as shown in FIG. 2, having a cylinder bore 14, a fluid reservoir 16 for brake fluid, a bleed port 18 providing fluid communication between the cylinder bore 14 and the fluid reservoir 16, and a primary piston 20 movable in the bore 14 for closing off the bleed port 18 and generating hydraulic braking pressure in the bore 14.

A primary hydraulic brake circuit 22, indicated by dashed lines in FIG. 1, is connected in a series fluid circuit relationship to the bore 14 of the master cylinder 12 for delivering pressurized brake fluid at the braking pressure to an inlet 24 of a hydraulically actuated braking device 26 and receiving a return flow of brake fluid from an outlet 24 of the hydraulically actuated braking device 26. It will be noted that the brake system A shown in FIG. 1 includes a primary hydraulic braking circuit 22 including a number of components for controlling the flow and pressure of brake fluid to both a left and right front braking device LF, RF, and a secondary braking circuit, generally indicated by arrow 28, for controlling both a left and right rear braking device LR, RR.

Because the components in the primary and secondary braking circuits 22, 28 are generally identical, only the components in the primary circuit 22 will be described in detail below. It will also be noted that in the system A shown in FIG. 1 the inlet and outlet to the braking device 26 is indicated by a single line 24. It should be noted that, although FIG. 1 shows a front/ rear split hydraulic system, the same basic circuit arrangement may also be utilized for a diagonal split hydraulic system where, for example, the RF and LR braking devices are connected to the master cylinder primary hydraulic outlet circuit 66 and the LF and RR braking devices are connected to the secondary master cylinder hydraulic outlet circuit 28.

The primary hydraulic brake circuit 22 includes a normally open inlet control valve 30 and a normally closed outlet control valve 32 for controlling flow in and out of each of the LF and RF braking devices 24. Each of the control valves 30, 32 also has associated therewith a check valve 34 allowing reverse flow through the check valve 34 when its associated control valve 30, 32 is in the closed position. The primary brake circuit also includes an isolation valve 36 and an associated check valve 38, allowing flow through the check valve 38 in a reverse direction when the isolation valve 36 is in the closed position. The isolation valve 36 is utilized for regulating or closing off the flow of brake fluid through a portion of the hydraulic brake circuit 22 from the master cylinder 12 during certain controlled braking operations.

A controlled braking pump 40 has an inlet 42 operatively connected through a check valve 46 and an accumulator 48 for receiving brake fluid from the primary hydraulic brake circuit 22, and an outlet 44 operatively connected through a damper 50 and an orifice 52 for providing pressurized brake fluid to the hydraulic brake circuit 22 at the braking pressure. The controlled braking pump 40 is driven by a motor 54. A pre-charge circuit, generally indicated by arrow 56, includes a pre-charge pump 58 having an inlet 60 operatively connected to the fluid reservoir 16, and an outlet 62 operatively connected via an outlet check valve 64 to an inlet portion 66 of the primary hydraulic circuit 22, with the inlet portion 66 being further connected to bore 14 of the master cylinder 12. The outlet check valve 64 is required, between pre-charge pump 58 and primary hydraulic brake circuit 22, to prevent reverse flow of fluid from the primary circuit 22 through the pre-charge pump 58 and pressure relief valve 76.

As will be seen from FIG. 2, the master cylinder 12 also includes a secondary piston 68 and a secondary bleed port 70 in the bore 14. The secondary piston 68 is separated axially from the primary piston 20 by a space, indicated by arrow 72, between the primary and secondary pistons 20, 68. The connections between the outlet 62 of the pre-charge pump 58 and the inlet portion 66 of the primary hydraulic brake circuit 22 are made to the bore 14 in the space 72 between the primary and secondary pistons 20, 68, such that pre-charge pressure generated by the pre-charge pump 58 will be communicated directly to the primary hydraulic brake circuit 22 via the inlet 66, and indirectly to the secondary hydraulic brake circuit 28 by movement of the secondary piston 68 in the bore caused by the existence of the pre-charge pressure in the space 72 between the primary and secondary pistons 20, 68 generating an axially acting force on the secondary piston 68.

The pre-charge circuit 56 also includes a second motor 74 driving the pre-charge pump 58, and a pressure relief valve 76 connected between the inlet to the outlet 60, 62 of the pre-charge pump 58 for regulating the pre-charge pressure generated by the pre-charge pump 58.

The pre-charge circuit 56 also includes a prime valve 78, having an inlet 80 connected to the input 66 of the primary hydraulic brake circuit 22, and an outlet 82 connected to the inlet 42 of the controlled braking pump 40, for selectively blocking and allowing a flow of brake fluid through the prime valve 78 between the inlet 66 of the primary hydraulic circuit 22 and the inlet 42 of the controlled braking pump 40. A check valve 84 allows reverse flow of brake fluid through the check valve 84 when the prime valve 78 is blocking flow

The brake apparatus A also includes a control circuit 86 including a number of sensors, and a control unit (ECU) for sensing when the brake apparatus A should be operated in a controlled braking mode, and connections to the control elements of the apparatus for controlling these elements during the controlled braking operation.

Prior brake systems of the type described above have several drawbacks. The pre-charge pump 58 and its associated drive motor 74, pressure relief valve 76, and check valve 64 are typically mounted on the master cylinder 12 or in a separate, remote, underhood location, which adds a large undesirable volume, on the order of about 500 cubic centimeters to the brake system, as well as undesirable additional weight, complexity and cost. Also, because the prime valve 78 and its associated check valve 84 are connected to the bore 14 and the inlet 66 to the primary hydraulic circuit 22, they must be designed to withstand and operate at typical braking pressures of about 2000 pounds per square inch, rather than the much lower pre-charge pressure of 50 to 75 pounds per square inch generated by the pre-charge pump 58. The need to withstand and operate at braking pressures significantly increases the size, weight and cost of the prime valve 78 and its associated check valve 84.

What is needed, therefore, is an improved controlled brake apparatus resolving one or more of the problems identified above. It is also desired that the improved brake apparatus be applicable to hybrid as well as conventional totally hydraulic controlled brake systems.

### SUMMARY OF THE INVENTION

Our invention provides an improved controlled brake apparatus, meeting the requirements discussed above, through use of a pre-charge circuit connected directly between the fluid reservoir of the master cylinder and the inlet of the controlled braking pump, to thereby direct pre-charge flow and pressure to the controlled braking pump inlet in a parallel circuit relationship to the primary hydraulic circuit, rather than in a series flow arrangement through the primary hydraulic circuit as was the case in prior brake systems. By feeding the pre-charge pressure and flow to the inlet of the controlled braking pump in this parallel circuit manner, components of the pre-charge circuit, such as the prime valve and its associated check valve are not exposed to braking pressure and can be made significantly smaller, lighter and at lower cost. A brake apparatus according to our invention may also include a pre-charge pump driven by the same motor used for driving the controlled braking pump, thereby reducing size weight and cost considerably, and allowing the pre-charge pump to be mounted in a more convenient location than on the master cylinder or remotely underhood, as was the case in the past.

In one form of our invention, a brake apparatus includes a master cylinder, a hydraulic brake circuit, a controlled braking pump and a pre-charge circuit. The master cylinder has a cylinder bore, a fluid reservoir for brake fluid, a bleed port providing fluid communication between the cylinder bore and the fluid reservoir, and a primary piston movable in the bore for closing off the bleed port and generating hydraulic braking pressure in the bore. The hydraulic brake circuit is connected in a series fluid circuit relationship to the bore of the master cylinder for delivering pressurized brake fluid at the braking pressure to an inlet of a hydraulically actuated braking device and receiving a return flow of brake fluid from an outlet of the hydraulically actuated braking device. The controlled braking pump has an inlet for receiving brake fluid from the hydraulic brake circuit and an outlet for providing pressurized brake fluid to the hydraulic brake circuit at the braking pressure required by the vehicle. The pre-charge circuit has an inlet operatively connected to the fluid reservoir and an outlet operatively connected to the inlet of the controlled braking pump to thereby form a parallel circuit to the series circuit formed by the cylinder bore and the hydraulic brake circuit for providing a pre-charge flow of brake fluid to the inlet of the controlled braking pump at a pre-charge pressure. The pre-charge circuit may further include pre-charge pump having an inlet operatively connected to the fluid reservoir and an outlet operatively connected to the inlet of the controlled braking pump.

Some forms of our invention may also include a motor operatively connected for driving both the controlled braking pump and the pre-charge pump. Other forms of our invention may include a first motor operatively connected for driving the controlled braking pump, and a second motor for driving the pre-charge pump.

The pre-charge circuit may further include a prime valve operatively connected within the pre-charge circuit in a series circuit relationship between the outlet of the pre-charge pump and the inlet of the controlled braking pump for selectively blocking or passing a flow of brake fluid through the prime valve.

In another form of our invention, a brake apparatus includes a hydraulic brake circuit, a controlled braking pump having an inlet for receiving brake fluid from the hydraulic brake circuit and an outlet for providing pressurized brake fluid to the hydraulic brake circuit at a braking pressure, a motor driving the controlled braking pump, and a pre-charge pump driven by the motor for providing a priming flow of brake fluid to the inlet of the controlled braking pump at a charge pressure lower than the braking pressure.

Our invention may also take the form of a method for operating a brake using the apparatus described herein, and is applicable to a variety of controlled braking systems including hydraulic, hybrid and electrically actuated braking devices including electro-mechanical and electro-hydraulic brake devices.

The foregoing and other features and advantages of our invention will become further apparent from the following detailed description of exemplary embodiments, read in conjunction with the accompanying drawings. The detailed description and drawings are merely illustrative of our invention rather than limiting, the scope of the invention being defined by the appended claims and equivalents thereof.

### BRIEF DESCRIPTION OF THE DRAWINGS

FIG. 1 is a schematic representation of a prior controlled brake system;
FIG. 2 is a cross section of a master cylinder of the type used in both prior brake systems and an apparatus according to our invention;
FIG. 3 is a schematic of a first exemplary embodiment of a brake apparatus according to our invention; and
FIGS. 4-10 are schematic representations of alternate embodiments of our invention.

### DETAILED DESCRIPTION

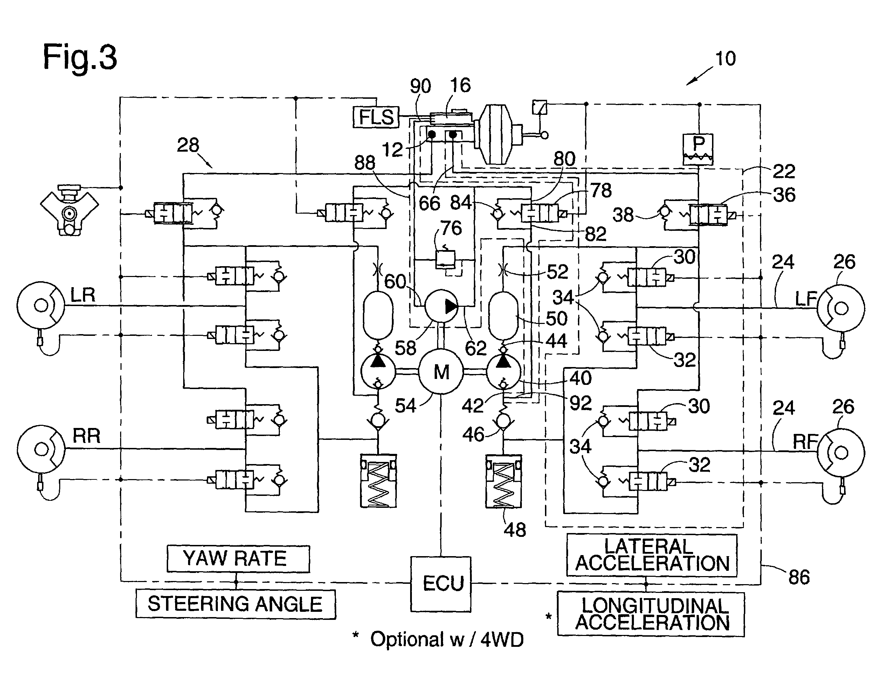

FIG. 3 depicts a first exemplary form of brake apparatus 10, according to our invention. The embodiment depicted in FIG. 3 includes many of the same components as the prior apparatus A discussed above with regard to FIGS. 1 and 2. To facilitate understanding of our invention and the distinctions between our invention and prior brake systems, components in FIG. 3 and subsequent FIGS. that are substantially equivalent or similar to the components described above will be given the same reference numbers. For the sake of brevity, where components bearing similar reference numbers are substantially equivalent or similar in function to the components described in detail above, the description of those components and their functions will not be repeated below.

The exemplary embodiment of the brake apparatus 10 depicted in FIG. 3, includes a master cylinder 12 similar to the one depicted in FIG. 2, having a cylinder bore 14, a fluid reservoir 16 for brake fluid, a bleed port 18 providing fluid communication between the cylinder bore 14 and the fluid reservoir 16, and a primary piston 20 movable in the bore 14 for closing off the bleed port 18 and generating hydraulic braking pressure in the bore 14.

A hydraulic brake circuit 22, indicated by dashed lines, is connected in a series fluid circuit relationship to the bore 14 of the master cylinder 12 for delivering pressurized brake fluid at the braking pressure to an inlet/outlet 24 of a hydraulically actuated braking device and receiving a return flow of brake fluid from the inlet/outlet 24 of the hydraulically actuated braking device 22.

A controlled braking pump 40 has an inlet 42 for receiving brake fluid from the hydraulic brake circuit 22 and an outlet 44 for providing pressurized brake fluid to the hydraulic brake circuit 22 at the braking pressure.

In contrast to the prior brake apparatus A depicted in FIG. 1, however, a pre-charge circuit 88 has an inlet 90 operatively connected to the fluid reservoir 16 and an outlet 92 operatively connected to the inlet 42 of the controlled braking pump 40, to thereby form a parallel circuit to the series circuit formed by the cylinder bore 14 and the hydraulic brake circuit 22 for providing a pre-charge flow of brake fluid to the inlet 42 of the controlled braking pump 40 at a pre-charge pressure. The pre-charge circuit 88 further includes a pre-charge pump 58 having an inlet 60 operatively connected to the fluid reservoir 16, and an outlet 62 operatively connected to the inlet 42 of the controlled braking pump 40. Specifically, the outlet 62 of the pre-charge pump 58 is connected in a series circuit relationship to the inlet 80 of a prime valve 78, and the outlet of the prime valve 78 is connected in a series circuit relationship to the inlet 42 of the controlled braking pump 40, for selectively blocking or passing a flow of brake fluid through the prime valve 78.

Also in contrast to the prior brake apparatus A shown in FIG. 1, the brake apparatus 10 shown in FIG. 3 includes a motor 54 operatively connected for driving both the controlled braking pump 40 and the pre-charge pump 58.

The pre-charge circuit 88 shown in FIG. 3 further includes a pressure operated relief valve 76 operatively connected from the outlet to the inlet of the pre-charge pump 58. The pre-charge circuit 88 further includes a check valve 84 operatively connected from the outlet 82 of the prime valve 78 to the outlet 44 of the pre-charge pump 40 for blocking flow through the check valve 84 from the inlet to the outlet 80, 82 of the prime valve 78, and allowing flow through the check valve 84 from the outlet 82 to the inlet 80 of the prime valve 78.

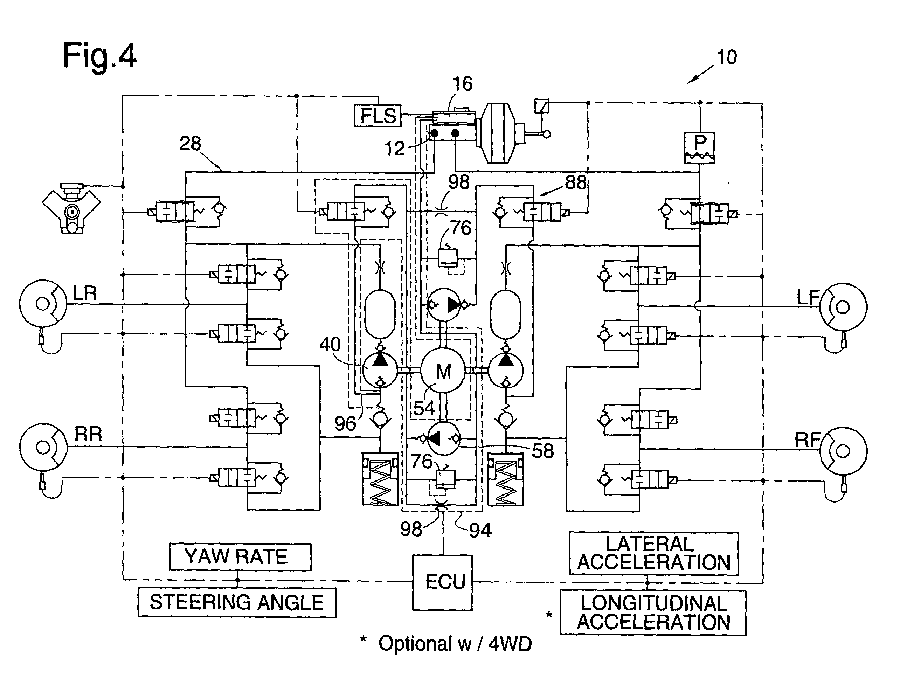

FIG. 4 shows an alternate exemplary embodiment of a brake apparatus 10 according to our invention, having a second pre-charge circuit 94 connected between the fluid reservoir 16 and the inlet 96 of the controlled braking pump 40 of the secondary hydraulic braking circuit 28. An orifice 98 of small diameter, on the order of .010 inch, is provided across the pressure control valve 76 to facilitate vacuum filling of the brake apparatus 10 with brake fluid. The first and second pre-charge circuits 88, 94 are identical in all other respects to the pre-charge circuit 88 described above. The second pre-charge circuit also includes a second pre-charge pump 58 driven by the motor 54.

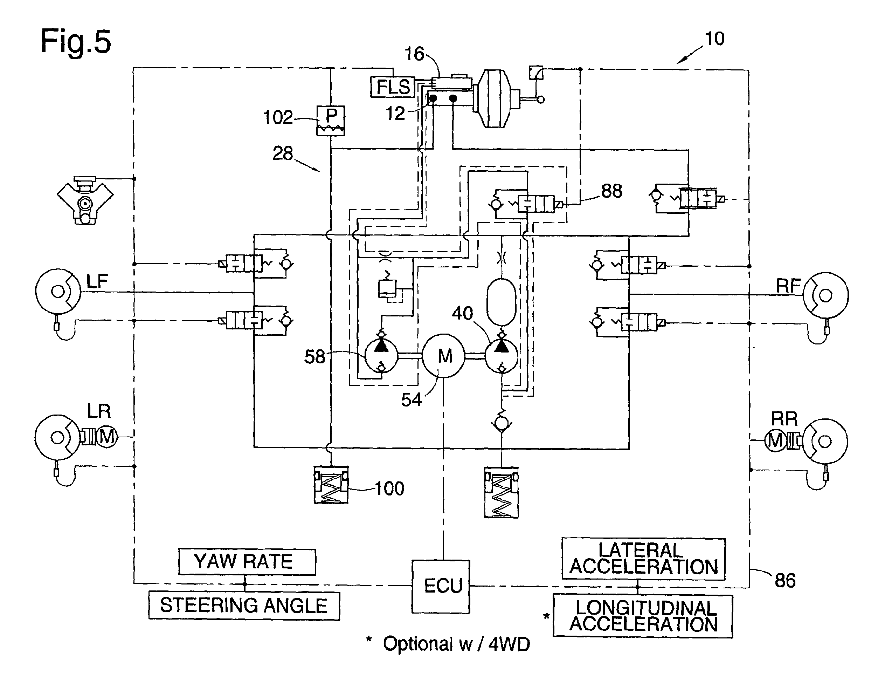

FIG. 5 shows a hybrid brake apparatus 10 according to our invention, having front hydraulic brakes LF, RF, and electrically actuated rear brakes LR, RR. The hybrid brake apparatus 10 includes a pre-charge circuit 88 as described above, with the motor 54 driving both the controlled braking pump 40 and the pre-charge pump 58. The secondary hydraulic circuit 28 includes a pedal-feel emulator 100 and a pressure sensor 102 operatively connected to receive pressurized brake fluid from the secondary piston 68 of the master cylinder 12.

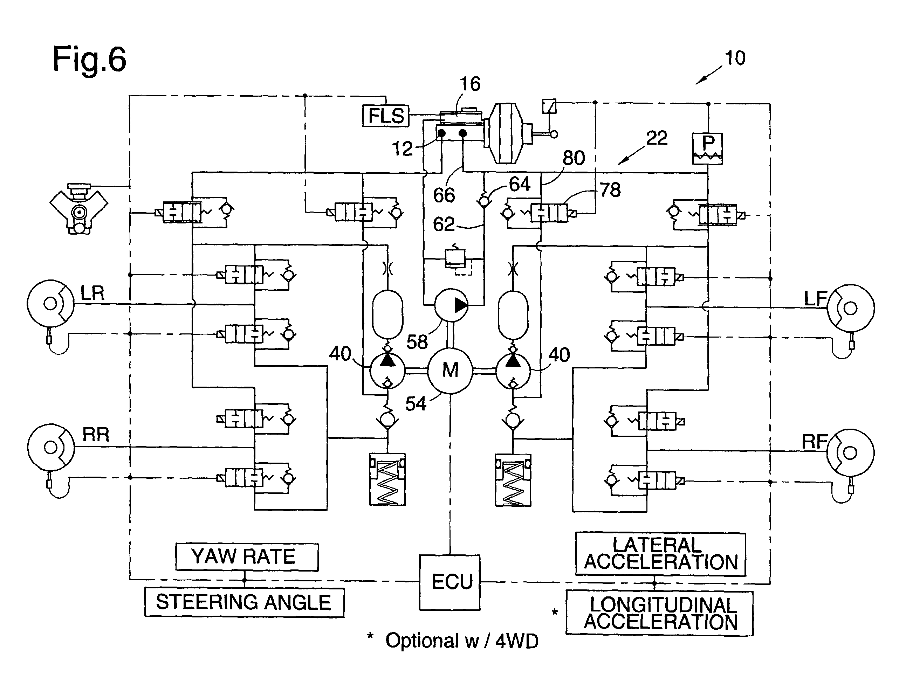

FIG. 6 shows an embodiment of a brake apparatus 10, according to our invention, having a pre-charge pump 58 driven by a common motor 54 with a pair of controlled braking pumps 40, in the same manner as described above with regard to the embodiment of FIG. 3, but having the output 62 of the pre-charge pump and the inlet 80 of a prime valve 78 connected to the inlet 66 of the hydraulic brake circuit 22 and bore 14, as described above in relation to FIGS. 1 and 2. An outlet check valve 64 is located between pre-charge pump 58 and primary hydraulic brake circuit 22 to prevent reverse flow of fluid from the primary circuit 22 through the pre-charge pump 58 and pressure relief valve 76.

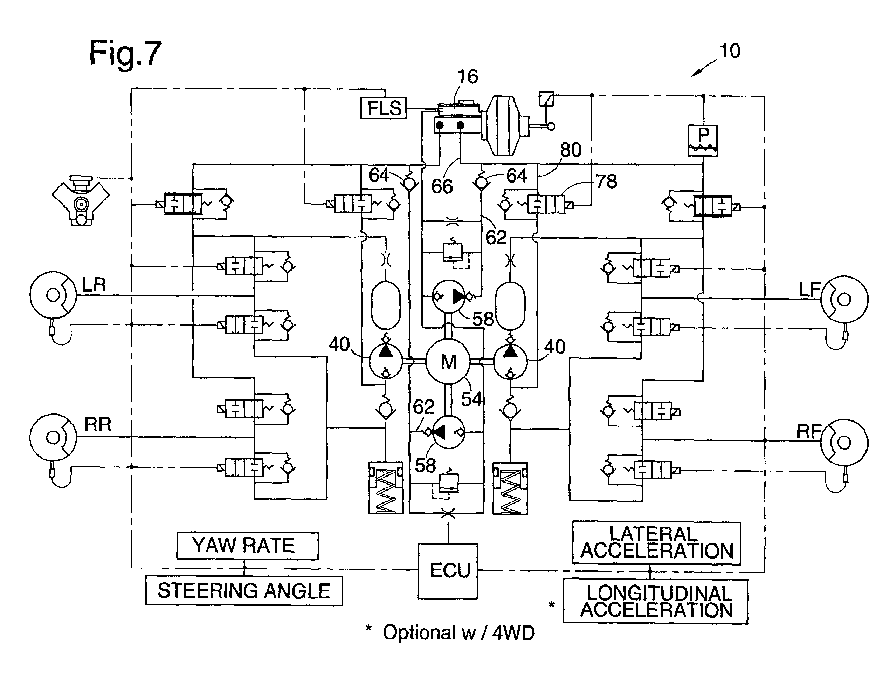

FIG. 7 shows an embodiment of our brake apparatus 10 that is similar to the embodiment in FIG.6, but having a second pre-charge pump 58 and a second prime valve 78 connected in the same manner as the first pre-charge pump and prime valve 58, 78 described above with respect to FIG. 6, and both pre-charge pumps 58 being driven in common by motor 54 with two controlled braking pumps 40.

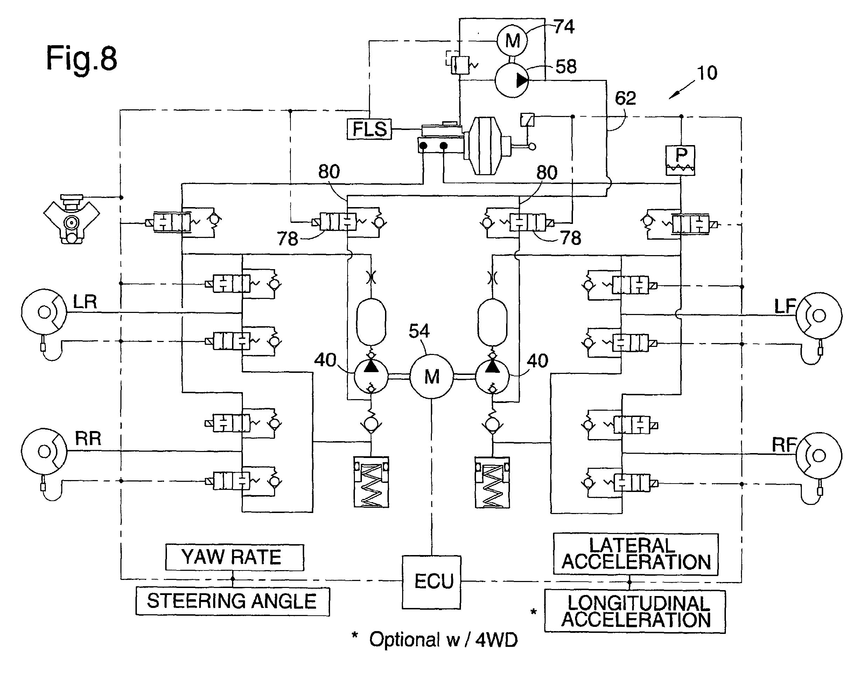

FIG. 8 shows an embodiment of our brake apparatus 10 that includes a pair of prime valves 78 having their inputs 80 connected to the output 62 of the pre-charge pump 58, as described above in relation to FIG. 3 rather than to the inlet 66 of the hydraulic brake circuit 22 and bore 14 as described in regard to the embodiment depicted in FIGS. 1 and 2, but having the pre-charge pump 58 driven by a second motor 74, rather than the motor 54 driving a pair of controlled braking pumps 40.

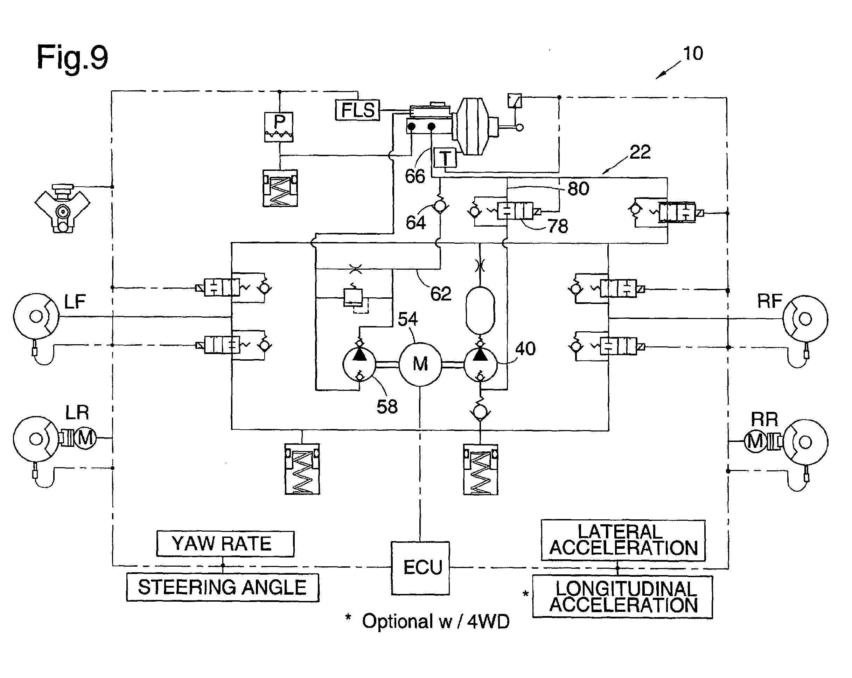

FIG. 9 shows a hybrid brake apparatus 10, according to our invention having a pre-charge pump 58 and a controlled braking pump 40 both driven by a common motor 54, as described above in relation to FIG. 5, but having the output 62 of the pre-charge pump 58 and the inlet 80 of a prime valve 78 connected to the inlet 66 of the hydraulic brake circuit 22 and bore 14, as described above in relation to FIGS. 1 and 2.

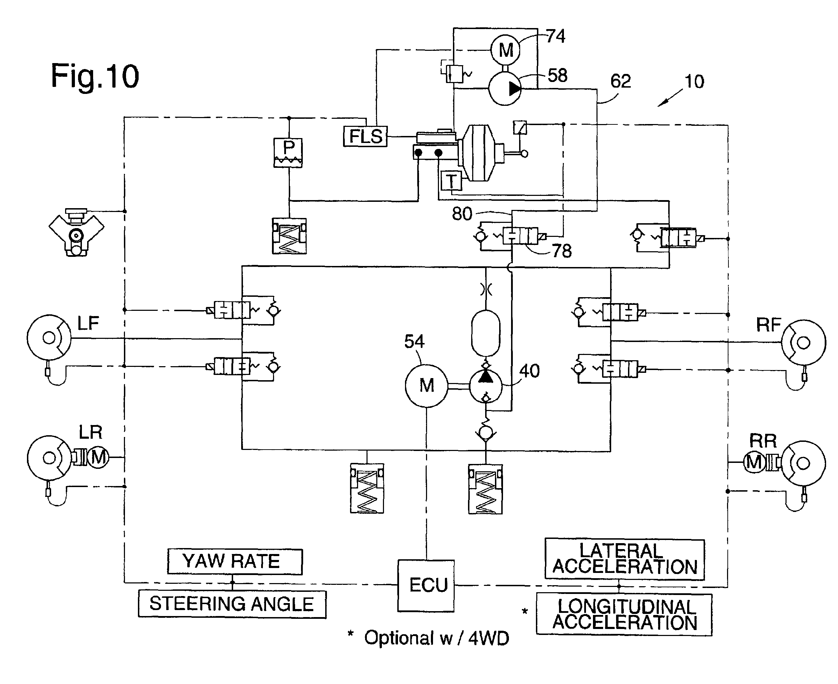

FIG. 10 shows a hybrid brake apparatus 10, according to our invention, having the input 80 of a prime valve 78 connected to the output 62 of the pre-charge pump 58, as described above in relation to FIG. 3 rather than to the inlet 66 of the hydraulic brake circuit 22 and bore 14 as described in regard to the embodiment depicted in FIGS. 1 and 2, but having the pre-charge pump 58 driven by a second motor 74, rather than the motor 54 driving the controlled braking pump 40.

Those having skill in the art will recognize that, while we presently consider it preferable to have the components according to our invention arranged as described above, we contemplate many other arrangements within the scope of our invention.

In summary therefore, while the embodiments of our invention disclosed herein are presently considered to be preferred, various changes and modifications can be made without departing from the spirit and scope of the invention. The scope of the invention is indicated in the appended claims, and all changes or modifications within the meaning and range of equivalents are intended to be embraced therein.

## Claims

1. A brake apparatus 10 comprising:
a master cylinder 12 having a cylinder bore 14, a fluid reservoir 16 for brake fluid, a bleed port 18 providing fluid communication between the cylinder bore 14 and the fluid reservoir 16, and a primary piston 20 movable in the bore 14 for closing off the bleed port 18 and generating hydraulic braking pressure in the bore 14;
a hydraulic brake circuit 22 connected in a series fluid circuit relationship to the bore 14 of the master cylinder 12 for delivering pressurized brake fluid at the braking pressure to an inlet 24 of a hydraulically actuated braking device 26 and receiving a return flow of brake fluid from an outlet 24 of the hydraulically actuated braking device 26;
a controlled braking pump 40 having an inlet 42 for receiving brake fluid from the hydraulic brake circuit 22 and an outlet 44 for providing pressurized brake fluid to the hydraulic brake circuit 22 at the braking pressure; and
a pre-charge circuit 88 having an inlet 90 operatively connected to the fluid reservoir 16 and an outlet 92 operatively connected to the inlet 42 of the controlled braking pump 40 to thereby form a parallel circuit to the series circuit formed by the cylinder bore 14 and the hydraulic brake circuit 22 for providing a pre-charge flow of brake fluid to the inlet 42 of the controlled braking pump 40 at a pre-charge pressure.

2. The brake apparatus 10 of claim 1 wherein the pre-charge circuit 88 further includes a pre-charge pump 58 having an inlet 60 operatively connected to the fluid reservoir 16 and an outlet 62 operatively connected to the inlet 42 of the controlled braking pump 40.

3. The brake apparatus 10 of claim 2 further including a motor 54 operatively connected for driving both the controlled braking pump 40 and the pre-charge pump 56.

4. The brake apparatus 10 of claim 2 further including a first motor 54 operatively connected for driving the controlled braking pump 40, and a second motor 74 for driving the pre-charge pump 58.

5. The brake apparatus of claim 2 wherein the pre-charge circuit 88 further includes a prime valve 78 operatively connected within the pre-charge circuit 56 in a series circuit relationship between the outlet 62 of the pre-charge pump 58 and the inlet 42 of the controlled braking pump 40 for selectively blocking or passing a flow of brake fluid through the prime valve 78.

6. The brake apparatus 10 of claim 5 further including a motor 54 operatively connected for driving both the controlled braking pump 40 and the pre-charge pump 58.

7. The brake apparatus 10 of claim 5 further including a first motor 54 operatively connected for driving the controlled braking pump 40, and a second motor 74 for driving the pre-charge pump 58.

8. The brake apparatus of claim 5 wherein the pre-charge circuit 88 further includes a pressure operated relief valve 76 operatively connected from the outlet 62 to the inlet 60 of the pre-charge pump 58.

9. The brake apparatus 10 of claim 8 wherein the pre-charge circuit 88 further includes a check valve 84 operatively connected from the outlet 82 of the prime valve 78 to the outlet 62 of the pre-charge pump 58 for blocking flow through the check valve 82 from the inlet 80 to the outlet 82 of the prime valve 78, and allowing flow through the check valve 78 from the outlet 82 to the inlet 80 of the prime valve 78.

10. The brake apparatus 10 of claim 8 wherein the pre-charge circuit 88 further includes an orifice 98 operatively connected from the inlet to the outlet of the pressure operated relief valve 76.

11. The brake apparatus 10 of claim 1 further including an electrically actuated braking device 26 operatively connected to and controlled in accordance with the braking pressure in the bore 14.

12. The brake apparatus 10 of claim 1 further including an electrically actuated braking device 26 operatively connected to and controlled in accordance with the position of the piston 20 in the bore 14.

13. A brake apparatus 10 comprising:
a hydraulic brake circuit 22;
a controlled braking pump 40 having an inlet 42 for receiving brake fluid from the hydraulic brake circuit 22 and an outlet 44 for providing pressurized brake fluid to the hydraulic brake circuit 22 at a braking pressure;
a motor 54 driving the controlled braking pump 40; and
a pre-charge pump 58 driven by the motor 54 for providing a priming flow of brake fluid to the inlet 42 of the controlled braking pump 40 at a charge pressure lower than the braking pressure.

14. The brake apparatus 10 of claim 13, further comprising a master cylinder 12 having a cylinder bore 14, a fluid reservoir 16 for brake fluid, a bleed port 18 providing fluid communication between the cylinder bore 14 and the fluid reservoir 16, and a primary piston 20 movable in the bore 14 for closing off the bleed port 18 and generating hydraulic braking pressure in the bore 14, and wherein:
the hydraulic brake circuit 22 is connected in a series fluid circuit relationship to the bore 14 of the master cylinder 12 for delivering pressurized brake fluid at the braking pressure to an inlet 24 of a hydraulically actuated braking device 26 and receiving a return flow of brake fluid from an outlet 24 of the hydraulically actuated braking device 26.

15. The brake apparatus 10 of claim 14 further comprising a pre-charge circuit 88 including the pre-charge pump 58, with the pre-charge circuit 88 having an inlet 90 operatively connected to the fluid reservoir 16 and an outlet 92 operatively connected to the inlet 42 of the controlled braking pump 40 to thereby form a parallel circuit to the series circuit formed by the cylinder bore 14 and the hydraulic brake circuit 22, for providing a pre-charge flow of brake fluid to the inlet 42 of the controlled braking pump 40 at a pre-charge pressure.

16. The brake apparatus 10 of claim 15 wherein the pre-charge pump 58 includes an inlet 60 and an outlet 62 with the inlet 60 of the pre-charge pump 58 operatively connected in a series circuit relationship to the inlet 90 of the pre-charge circuit 88, and the pre-charge circuit 88 further includes a prime valve 78 operatively connected within the pre-charge circuit 88 in a series circuit relationship between the outlet 62 of the pre-charge pump 58 and the inlet 42 of the controlled braking pump 40 for selectively blocking or passing a flow of brake fluid through the prime valve 78.

17. The brake apparatus 10 of claim 16 wherein the pre-charge circuit 88 further includes a pressure operated relief valve 76 operatively connected from the outlet 62 to the inlet 60 of the pre-charge pump 58.

18. The brake apparatus 10 of claim 17 wherein the prime valve 78 includes an inlet 80 operatively connected to the output 62 of the pre-charge pump 58 and an outlet 82 operatively connected to the input 42 of the controlled braking pump 40, and the pre-charge circuit 88 further includes a check valve 84 operatively connected from the outlet 82 of the prime valve 78 to the outlet 62 of the pre-charge pump 58 for blocking flow through the check valve 84 from the inlet 80 to the outlet 82 of the prime valve 78, and allowing flow through the check valve 84 from the outlet to the inlet of the prime valve 78.

19. The brake apparatus 10 of claim 14 further comprising a pre-charge circuit 56 including the pre-charge pump 58, and wherein the hydraulic brake circuit 22 includes an inlet 66 connected to the bore 14 of the master cylinder 12 and an outlet connected to the inlet 42 of the controlled braking pump 40, with the pre-charge circuit 56 having an inlet operatively connected to the fluid reservoir 16 and an outlet operatively connected in a series fluid circuit relationship to the inlet 66 of the hydraulic brake circuit 22 for providing a pre-charge flow of brake fluid through the hydraulic brake circuit 22 to the inlet 42 of the controlled braking pump 40 at a pre-charge pressure.

20. The brake apparatus 10 of claim 19 further comprising a check valve 64 between the outlet of the pre-charge circuit 56 and the inlet 66 of the of the hydraulic brake circuit 22 for allowing fluid to flow from the pre-charge circuit 56 to the hydraulic circuit 22 but blocking a flow of fluid in the reverse direction from the hydraulic circuit 22 to the pre-charge circuit 56.

21. The brake apparatus 10 of claim 19 wherein the pre-charge circuit 56 further includes a pressure operated relief valve 76 operatively connected from the outlet 62 to the inlet 60 of the pre-charge pump 58.

22. The brake apparatus 10 of claim 19 wherein the hydraulic brake circuit 22 further includes a prime valve 78 operatively connected within the hydraulic brake circuit 22 in a series circuit relationship between the inlet 66 of the hydraulic brake circuit 22 and the inlet 42 of the controlled braking pump 40 for selectively blocking or passing a flow of brake fluid through the prime valve 78.

23. The brake apparatus 10 of claim 22 wherein the prime valve 78 includes an inlet 80 operatively connected to the output 62 of the pre-charge pump 58 and an outlet 82 operatively connected to the input 42 of the controlled braking pump 40, and the pre-charge circuit 56 further includes a check valve 84 operatively connected from the outlet 82 of the prime valve 78 to the outlet 62 of the pre-charge pump 58 for blocking flow through the check valve 84 from the inlet 80 to the outlet 82 of the prime valve 78, and allowing flow through the check valve 84 from the outlet 82 to the inlet 80 of the prime valve 78.

24. A method for operating a brake apparatus 10 including:
a master cylinder 12 having a cylinder bore 14, a fluid reservoir 16 for brake fluid, a bleed port 18 providing fluid communication between the cylinder bore 14 and the fluid reservoir 16, and a primary piston 20 movable in the bore 14 for closing off the bleed port 18 and generating hydraulic braking pressure in the bore 14;
a hydraulic brake circuit 22 connected in a series fluid circuit relationship to the bore 14 of the master cylinder 12for delivering pressurized brake fluid at the braking pressure to an inlet 24 of a hydraulically actuated braking device 26 and receiving a return flow of brake fluid from an outlet 24 of the hydraulically actuated braking device 26;
a controlled braking pump 40 having an inlet 42 for receiving brake fluid from the hydraulic brake circuit 22 and an outlet 44 for providing pressurized brake fluid to the hydraulic brake circuit 22 at the braking pressure; and
a pre-charge circuit 88 for providing a pre-charge flow of brake fluid to the inlet 42 of the controlled braking pump 40 at a pre-charge pressure;
the method comprising operatively connecting the pre-charge circuit 88 in a series circuit relationship between the fluid reservoir 16 and the inlet 42 of the controlled braking pump 40, to thereby form a parallel circuit to the series circuit formed by the cylinder bore 14 and the hydraulic brake circuit 22.
